Europäisches Patentamt

European Patent Office

Office européen des brevets

(11) Numéro de publication: **0 094 870**
**A1**

## (12) DEMANDE DE BREVET EUROPEEN

(21) Numéro de dépôt: **83400931.8**

(22) Date de dépôt: **06.05.83**

(51) Int. Cl.³: **F 16 H 1/42**
**F 16 H 1/445, B 60 K 17/34**

(30) Priorité: **14.05.82 FR 8208440**

(43) Date de publication de la demande:
**23.11.83 Bulletin 83/47**

(84) Etats contractants désignés:
**DE FR GB IT**

(71) Demandeur: **Dangel, Henry**
**7 Rue du Sillon**
**F-68100 Mulhouse(FR)**

(72) Inventeur: **Dangel, Henry**
**7 Rue du Sillon**
**F-68100 Mulhouse(FR)**

(74) Mandataire: **Bressand, Georges et al,**
**c/o CABINET LAVOIX 2 Place d'Estienne d'Orves**
**F-75441 Paris Cedex 09(FR)**

(54) **Ensemble de boîte-transfert à différentiel inter-ponts pour véhicule à quatre roues motrices.**

(57) Ce dispositif de transmission pour véhicule à quatre roues motrices comprend au moins deux différentiels dont un premier comporte deux demi-arbres de sortie entraînant chacun une roue motrice d'un premier essieu.

Ce dispositif de transmission comprend un deuxième différentiel intercalé entre ledit premier différentiel (1) et l'une desdites roues, l'organe d'entrée (17) de ce deuxième différentiel (12) étant entraîné par le demi-arbre correspondant (11) du premier différentiel (1) et ses organes de sortie (21, 23, 24) entraînant d'une part ladite roue et d'autre part un arbre de transmission (32) relié à un deuxième essieu. Le premier différentiel est du type à train épicycloïdal répartissant inégalement sur ses organes de sortie le couple moteur qui est appliqué à son organe d'entrée.

EP 0 094 870 A1

./...

Croydon Printing Company Ltd.

Fig. 2

Ensemble de boîte-transfert à différentiel inter-ponts pour véhicule à quatre roues motrices.-

La présente invention est relative à un ensemble de boîte-transfert et de différentiel inter-ponts pour véhicule à quatre roues motrices.

Les avantages qu'assure une transmission à quatre roues motrices aux véhicules tout terrain et même aux véhicules routiers, pour le surcroît de motricité qu'elle procure dans leurs évolutions dans des conditions de mauvaise adhérence sont bien connus. En effet, la transmission d'un couple donné, simultanément sur les quatre roues d'un véhicule, permet de diviser l'effort à la jante par deux par rapport à une transmission classique à deux roues motrices.

Si la transmission à quatre roues motrices est donc indispensable sur les véhicules tout terrain, elle présente également un très grand intérêt pour les véhicules routiers en raison de la stabilité de trajectoire et de l'adhérence qu'elle assure sur les routes glissantes.

Les quatre roues doivent alors être motrices en permanence, ce qui rend nécessaire l'utilisation d'un différentiel inter-ponts dans la boîte-transfert.

On connaît déjà de nombreux types de véhicules tout terrain à quatre roues motrices et l'agencement d'une boîte-transfert avec un différentiel inter-ponts est classique et diverses configurations en ont été réalisées, notamment sur des véhicules automobiles à moteur longitudinal.

La conception, l'étude et la mise au point d'un véhicule spécifique entraînant des frais importants, il est apparu souhaitable de réaliser un ensemble de boîte-transfert et de différentiel inter-ponts pouvant être adapté à des véhicules classiques de grande série ; un tel agencement a déjà été réalisé sur des véhicules à moteur longitudinal mais au prix d'un encombrement accru.

0094870

2

En ce qui concerne les véhicules de série à moteur transversal et à traction avant la réalisation d'un tel ensemble adaptable qui soit simple, efficace et compact se heurte à de nombreuses difficultés techniques.

L'invention a pour but de résoudre ces difficultés en réalisant un dispositif de transmission pour véhicule à quatre roues motrices adaptable aussi bien sur un véhicule de grande série à moteur avant, arrière, transversal ou longitudinal.

L'invention a pour objet à cet effet un dispositif de transmission pour véhicule à quatre roues motrices comprenant au moins deux différentiels dont un premier comporte deux demi-arbres de sortie entraînant chacun une roue motrice d'un premier essieu, caractérisé en ce qu'il comprend un deuxième différentiel intercalé entre ledit premier différentiel et l'une desdites roues, l'organe d'entrée de ce deuxième différentiel étant entraîné par le demi-arbre correspondant du premier différentiel et ses organes de sortie entraînant d'une part ladite roue et d'autre part un arbre de transmission relié à un deuxième essieu.

Suivant un mode de réalisation préféré de l'invention ledit premier différentiel est du type à train épicycloïdal dont les caractéristiques sont choisies telles que le couple moteur appliqué à la couronne soit réparti inégalement entre le demi-arbre entraînant ladite roue et le demi-arbre entraînant le deuxième différentiel.

De façon avantageuse le couple moteur est réparti à raison de 1/3 sur le demi-arbre entraînant ladite roue et de 2/3 sur le demi-arbre entraînant le deuxième différentiel.

Suivant une autre caractéristique de l'invention, le premier carter dudit deuxième différentiel est soli-

3

daire du carter du premier différentiel et des moyens de verrouillage sont prévus entre le corps de celui-ci et ledit organe de sortie entraîné par le deuxième différentiel.

D'autres caractéristiques et avantages de l'invention apparaîtront au cours de la description qui va suivre, faite en se référant au dessin annexé donné uniquement à titre d'exemple et dans lequel :

- la Fig. 1 est une vue schématique d'un dispositif de transmission suivant l'invention appliqué à un véhicule à quatre roues motrices, à moteur avant transversal ;

- la Fig. 2 est une vue de dessus en plan et en coupe d'un mode de réalisation de l'ensemble de boite-transfert avec différentiel inter-ponts représenté schématiquement à la Fig. 1.

- la Fig. 3 est une vue partielle montrant le premier différentiel dans une variante du dispositif suivant l'invention.

L'invention sera décrite ci-après dans son application à un véhicule à moteur transversal et à traction avant.

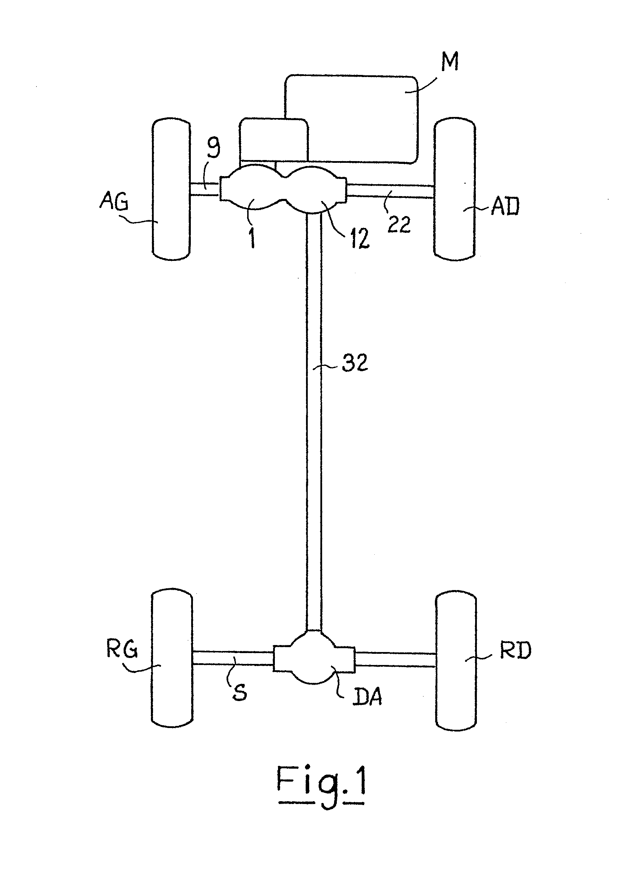

En se référant au dessin, la Fig. 1 montre schématiquement un dispositif de transmission suivant l'invention dans son application à un véhicule comportant un moteur avant M entraînant deux roues avant motrices gauche et droite AG, AD respectivement par l'intermédiaire d'un différentiel (1) et de deux demi-arbres (9, 22). Le véhicule comporte également un essieu arrière S portant deux roues gauche et droite RG et RD respectivement.

Suivant l'invention, les roues arrière RG et RD sont entraînées au moyen d'un dispositif de transmission comprenant un deuxième différentiel (12) à partir de l'un des organes de sortie du différentiel (1), ce deu-

4

xième différentiel étant intercalé entre le premier et l'une, AD, des roues avant motrices et ses organes de sortie entraînant un arbre de transmission (32) et un différentiel arrière DA de façon connue.

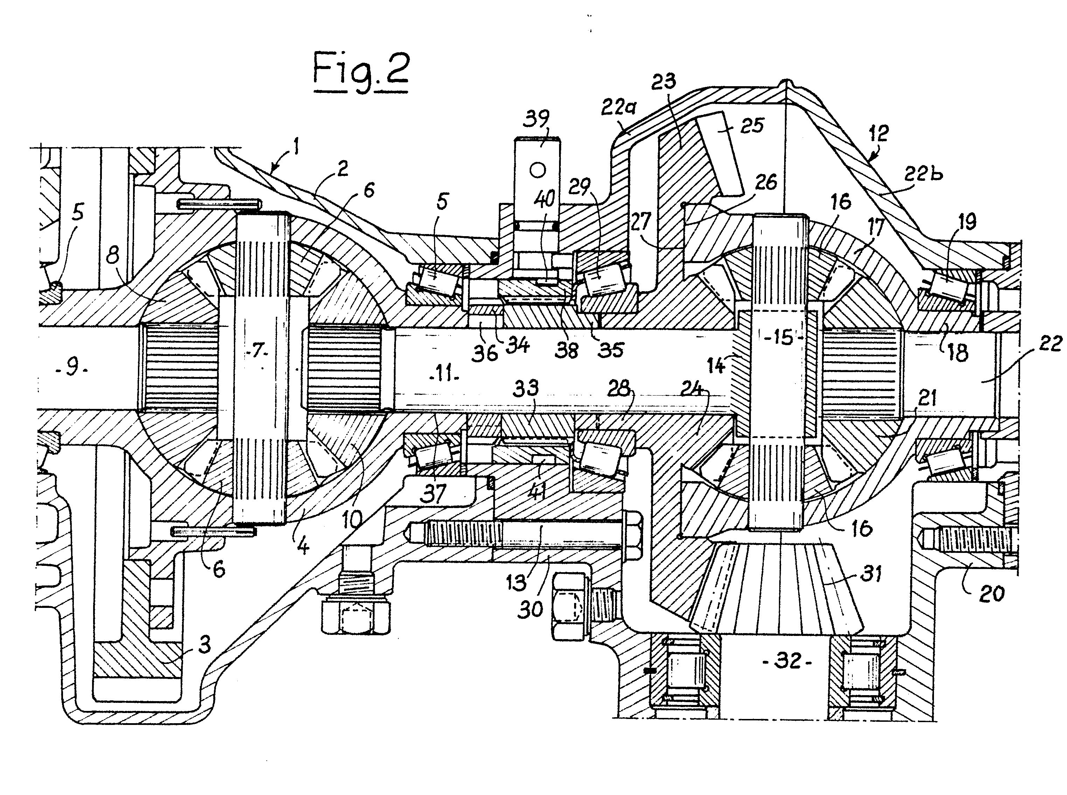

En se référant à la Fig. 2, un premier différentiel d'un véhicule automobile à quatre roues motrices, désigné dans son ensemble par la référence (1) comprend de façon connue un carter (2) enfermant une couronne. dentée (3) entraînée par la sortie de la boîte de vitesses du véhicule (non représentée) cette couronne étant solidaire d'un boîtier ou corps (4) monté rotatif dans le carter (2) au moyen de roulement (5) et entraînant des satellites (6) montés sur un axe (7) et engrenant avec des planétaires dont l'un (8) est solidaire d'un demi-arbre (9), par exemple de roue avant gauche et dont l'autre (10) est solidaire d'un demi-arbre (11) qui, sur le véhicule d'origine porte à son extrémité opposée la roue avant droite du véhicule, plus espacée du différentiel que la roue avant gauche.

Suivant l'invention, le dispositif de transmission comprend un deuxième différentiel désigné dans son ensemble par la référence (12) et intercalé entre le premier différentiel (1) et la roue avant droite du véhicule.

Suivant l'exemple d'exécution représenté, le carter du différentiel (12) est formé de deux demi-coquilles (22a, 22b) dont l'une (22a) est fixée à l'ouverture de droite du carter (2) du différentiel (1), par exemple au moyen de vis (13), les deux demi-coquilles étant assemblées entre elles par des moyens connus non représentés.

Le différentiel (12) comprend un organe d'entraînement qui est constitué par le demi-arbre (11) de sortie du premier différentiel dont l'extrémité opposée au

5

différentiel (1) a été modifiée par exemple comme représenté en (14) de façon à recevoir et à entraîner en rotation un axe perpendiculaire (15) portant des satellites (16) et dont les extrémités sont montées dans un boîtier ou corps (17) présentant la forme d'une cloche dont la partie étroite ou moyeu (18) est montée au moyen d'un roulement (19) dans l'extrémité de droite (20) de la demi-coquille (22b).

Les satellites (16) engrènent d'une part avec un planétaire (21) accouplé à un demi-arbre de sortie (22) monté rotatif dans le moyeu (18) du corps (17) et à l'extrémité externe duquel est monté la roue avant droite du véhicule, et d'autre part avec un organe de sortie (23) constitué par un plateau circulaire ayant deux dentures concentriques (24, 25), la denture centrale (24) constituant le second planétaire du différentiel (12) et la denture externe (25) constituant une couronne.

Les dentures (24, 25) délimitent entre elles une surface plane annulaire (26) sur laquelle est disposée en appui une surface circulaire d'extrémité (27) du corps (17). Le moyeu (28) de l'organe (23) est monté rotatif autour du demi-arbre (11) au moyen d'un roulement (29) dans l'extrémité (30) de la demi-coquille (22a).

La denture (25) formant couronne engrène avec un pignon (31) solidaire d'un arbre (32) de transmission de couple au différentiel entraînant les roues arrière du véhicule (non représenté).

On comprend que le demi-arbre (22) de la roue avant droite est entraîné en rotation dans le même sens que le demi-arbre (9) du différentiel (1) et que le demi-arbre (11), l'organe de sortie (23) entraîné par les satellites (16) transmettent le mouvement au pignon (31) et à l'arbre de transmission (32). On obtient ainsi un entraînement constant sur les quatre roues du véhicule

6

au moyen d'un dispositif de transmission disposé au même niveau que le différentiel d'origine du véhicule, c'est-à-dire que son montage n'entraîne pas un abaissement de la garde au sol.

Il convient cependant d'observer que dans le dispositif de transmission décrit ci-dessus le couple moteur appliqué à la couronne 3 du premier différentiel 1 est inégalement reparti entre les deux roues avant, la roue avant gauche recevant 50 % de ce couple, tandis que les 50 % restant sont répartis par moitié entre la roue avant droite et l'organe de sortie 23 du deuxième différentiel 12.

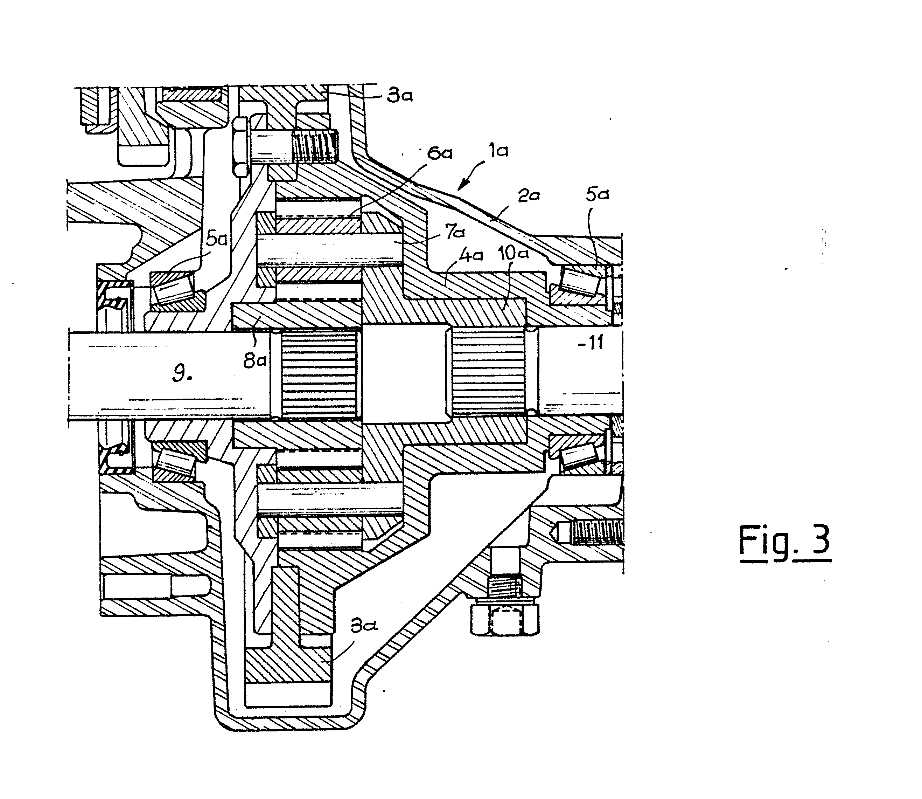

Pour remédier à cet inconvénient, suivant une variante représentée à la Fig. 3, le premier différentiel est avantageusement du type à train épicycloïdal dont les caractéristiques sont choisies telles que le couple moteur appliqué à son organe d'entrée soit inégalement reparti sur ses organes de sortie.

Ce différentiel à train épicycloïdal, désigné dans son ensemble par la référence 1a, est classique et en conséquence ne sera décrit que succintement.

Comme connu en soi il comprend un carter 2a, un organe d'entrée constitué par une couronne 3a solidaire d'un boîtier 4a comportant une denture interne avec laquelle engrènent des satellites 6a montés rotatifs sur des axes 7a d'un porte-satellites 10a accouplé au moyen de cannelures au demi-arbre droit 11.

Les satellites 6a engrènent également avec une denture externe d'un planétaire 8a constitué par un manchon entourant l'extrémité du demi-arbre 9 auquel il est accouplé au moyen de cannelures.

Le boîtier 4a tourillonne dans des roulements 5a et est enfermé dans une coquille 2a.

7

Les caractéristiques de ce différentiel sont choisies de telle sorte que le couple moteur appliqué à la couronne 3a soit réparti à raison de 1/3 sur le demi-arbre avant gauche 9 et de 2/3 sur le demi-arbre 11 d'entraînement du second différentiel 12 dont la sortie est également répartie sur le demi-arbre avant droit 22 et sur l'organe de sortie 23, à raison de 1/3 sur chacun.

On a ainsi réalisé un ensemble compact pouvant être adapté sur un véhicule de série sans modifications essentielles de celui-ci.

L'ensemble suivant l'invention comprend en outre un dispositif de verrouillage utilisable en cas de patinage, ce dispositif étant prévu entre le corps (4) du premier différentiel et l'organe de sortie (23) solidaire du planétaire (24) du deuxième différentiel (12).

Ce dispositif comprend un premier manchon (33) monté rotatif autour du demi-arbre (11) et comportant des cannelures sur sa surface périphérique externe, et un second manchon (34) également monté de façon à tourner sur le demi-arbre (11) et comportant également dans sa surface périphérique externe des cannelures correspondant aux cannelures du manchon (33).

Les surfaces en contact des manchons (33, 34) sont lisses tandis que leurs surfaces d'extrémité opposées comportent des crabots (35, 36) en prise avec des crabots correspondants formés dans le moyeu (28) de l'organe de sortie (23) d'une part, et dans le moyeu (37) du corps (4) du différentiel (1) d'autre part.

Un troisième manchon (38) entoure les manchons (33, 34) et comporte dans sa surface périphérique interne des cannelures adaptées pour coopérer avec les cannelures des manchons (33, 34). Le manchon (38) est monté coulissant et sa longueur est appropriée pour lui per-

8

mettre d'être déplacé d'une première position (représentée au dessin) dans laquelle il entoure uniquement le manchon (33), à une seconde position dans laquelle ses cannelures sont en prise à la fois avec celles des manchons (33, 34) solidarisant ainsi en rotation le corps (4) et la couronne (23).

Le manchon (38) du dispositif de verrouillage est actionné au moyen d'un axe (39) s'étendant à travers un trou prévu dans la partie (30) de la demi-coquille (22a) et comportant à son extrémité interne un doigt excentré (40) engagé dans une gorge périphérique (41) du manchon (38).

On comprend que lorsqu'on fait tourner l'axe (39) le doigt (40) entraîne le manchon (38) qui coulisse pour venir s'engager en prise par ses cannelures avec les deux manchons simultanément verrouillant ainsi ensemble la couronne (23) et le corps (4).

On remarquera que ce dispositif de verrouillage intercalé entre les deux différentiels n'augmente pas l'encombrement de l'ensemble du dispositif.

L'ensemble suivant l'invention est particulièrement simple, compact et donc économique et son montage sur des véhicules de série peut être effectué directement sur la chaîne de montage au moyen de pièces simples et peu coûteuses. En outre, il ne nécessite pas d'augmenter la garde au sol du véhicule.

Cet ensemble est de préférence complété par un second dispositif de blocage du différentiel d'origine, d'un type classique quelconque par exemple à glissement limité prévu de façon à être utilisé en cas de patinage de la roue avant gauche.

Bien que l'invention ait été décrite dans son application à un véhicule à moteur transversal et à traction avant on comprend, bien entendu, qu'elle est é-

9

galement applicable à un véhicule à moteur transversal arrière ou à moteur longitudinal monté à l'avant ou à l'arrière du véhicule.

10

REVENDICATIONS

1 - Dispositif de transmission pour véhicule à quatre roues motrices comprenant au moins deux différentiels dont un premier comporte deux demi-arbres de sortie entraînant chacun une roue motrice d'un premier essieu, caractérisé en ce qu'il comprend un deuxième différentiel (12) intercalé entre ledit premier différentiel (1) et l'une desdites roues, l'organe d'entrée (17) de ce deuxième différentiel (12) étant entraîné par le demi-arbre correspondant (11) du premier différentiel (1) et ses organes de sortie (23,24) entraînant d'une part ladite roue et d'autre part un arbre de transmission (32) relié à un deuxième essieu.

2 - Dispositif de transmission suivant la revendication 1, caractérisé en ce que le carter (22a, 22b) dudit deuxième différentiel (12) est solidaire du carter (2) du premier différentiel (1) et des moyens de verrouillage (33, 34, 38) sont prévus entre le corps (4) de celui-ci et ledit organe de sortie (23) entraîné par ledit deuxième différentiel (12).

3 - Dispositif de transmission suivant la revendication 2, caractérisé en ce que l'extrêmité dudit arbre de sortie (11) du premier différentiel (1) entraîne le second différentiel (12) par l'intérieur et est adaptée pour recevoir et entraîner en rotation un axe (15) solidaire du corps (17) dudit second différentiel et portant les satellites (16) de celui-ci.

4 - Dispositif de transmission suivant la revendication 3, caractérisé en ce que l'un des planétaires (21) du second différentiel (12) est accouplé à un demi-arbre (22) portant l'une des roues du véhicule, tandis que l'autre planétaire est constitué par une denture (24) d'un organe de sortie (23).

11

5 - Dispositif de transmission suivant la revendication 4, caractérisé en ce que ledit organe de sortie (23) est monté librement rotatif sur ledit demi-arbre (11) entraînant le deuxième différentiel et comporte une denture externe (25) formant couronne qui engrène avec un pignon (31) solidaire d'un arbre (32) de transmission du couple à l'autre essieu.

6 - Dispositif de transmission suivant la revendication 2, caractérisé en ce que lesdits moyens de verrouillage comprennent deux organes (33,34) montés rotatifs bout à bout sur le demi-arbre (11) et solidaires en rotation dudit organe de sortie (23) et du corps (4) du premier et du deuxième différentiels respectivement, et coopérant avec un troisième organe (38) de liaison.

7 - Dispositif de transmission suivant la revendication 6, caractérisé en ce que lesdits organes (33, 34) montés rotatifs sont constitués par deux manchons comportant des crabots (35, 36) en prise avec des crabots complémentaires de l'organe (23) et du corps (4) respectivement, et ayant des cannelures externes, ledit organe de liaison (38) étant un manchon comportant des cannelures internes complémentaires et monté coulissant axialement sur les deux premiers.

8 - Dispositif de transmission suivant la revendication 7, caractérisé en ce que ledit organe de liaison comporte une gorge périphérique externe dans laquelle est en prise un doigt excentré (40) d'une tige de commande (39) montée rotative à travers le carter de l'un desdits premier et deuxième différentiels.

9 - Dispositif de transmission suivant l'une quelconque des revendications précédentes, caractérisé en ce que le premier différentiel 1a est du type à train épicycloïdal (3a, 6a, 8a) ayant des caractéristiques telles que le couple moteur appliqué à sa couronne (3a) soit

12

réparti inégalement entre le demi-arbre 9 entraînant la dite roue et le demi-arbre 11 entraînant le deuxième différentiel 12.

10 - Dispositif de transmission suivant la revendication 9, caractérisé en ce que ledit couple moteur est réparti à raison de 1/3 sur le demi-arbre 9 entraînant la roue et de 2/3 sur le demi-arbre 11 entraînant le deuxième différentiel 12.

Fig.1

Fig.2

Fig. 3

0094870

Office européen
des brevets

**RAPPORT DE RECHERCHE EUROPEENNE**

Numéro de la demande

EP 83 40 0931

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 358 288 (SOCIETE DE FABRICATION ET DE VENTE DE MATERIELS AERAULIQUES ET THERMIQUES STEMAT S.A.) * En entier * | 1 | F 16 H 1/42 F 16 H 1/445 B 60 K 17/34 |
| A | FR-A- 578 098 (M.H. LANZ) * En entier * | 1 | |
| A | GB-A- 113 653 (T.H. MILLINGTON) * En entier * | 1 | |

DOMAINES TECHNIQUES
RECHERCHES (Int. Cl. ³)

F 16 H
B 60 K

Le présent rapport de recherche a été établi pour toutes les revendications

| Lieu de la recherche | Date d'achèvement de la recherche | Examinateur |
|---|---|---|
| LA HAYE | 27-06-1983 | HARRISON M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82